# EUROPÄISCHE PATENTSCHRIFT

(11) **EP 3 149 093 B1**
(45) Veröffentlichungstag und Bekanntmachung des Hinweises auf die Patenterteilung: **15.05.2019**
(21) Anmeldenummer: 15729765.6
(22) Anmeldetag: 28.05.2015
(51) Int. Cl.: C09D 129/04, C09D 183/04

(54) **HYDROPHILE BESCHICHTUNG FÜR WÄRMETAUSCHER**
HYDROPHILIC COATING FOR HEAT EXCHANGER
REVÊTEMENT HYDROPHILE POUR ÉCHANGEUR DE CHALEUR

(30) Priorität: 30.05.2014 DE 102014210278
(43) Veröffentlichungstag der Anmeldung: 05.04.2017
(73) Patentinhaber: Henkel AG & Co. KGaA, 40589 Düsseldorf (DE)
(72) Erfinder: DE ZEEUW, Ard, 40593 Düsseldorf (DE); MÖLLER, Thomas, 40593 Düsseldorf (DE)
(74) Vertreter: Henkel IP Department
(86) Internationale Anmeldenummer: PCT/EP2015/061775
(87) Internationale Veröffentlichungsnummer: WO 2015/181265

(56) Entgegenhaltungen:
- EP-A1- 1 245 654
- EP-A1- 2 380 938
- WO-A1-2012/165494
- JP-A- 2001 247 822
- JP-A- 2010 007 013
- US-A- 5 813 452

## Beschreibung

Die vorliegende Erfindung richtet sich auf die Verwendung einer Zusammensetzung, die mindestens einen härtbaren Polyvinylalkohol und mindestens ein Benetzungsmittel enthält, zum Beschichten eines Wärmetauschers sowie auf ein Verfahren zum Beschichten eines solchen Substrats, wobei die Zusammensetzung verwendet wird.

Metallische Substrate weisen aufgrund ihrer Oberflächenspannung eine erhöhte Tendenz zur Tropfenbildung von kondensiertem Wasser auf. Vor allem bei hoher Luftfeuchtigkeit tritt die Tropfenbildung vermehrt auf und fördert die Korrosion metallischer Substrate. Insbesondere ist die Bildung von Wassertropfen auf Wärmetauschern unerwünscht, da die Tropfenbildung geschlossene Wasserfilme auf der Oberfläche verhindert. Geschlossene Wasserfilme weisen vorteilhafterweise eine hohe Verdampfungsrate auf und Wärmeaustauscher werden folglich schneller und effizienter gekühlt. Um metallische Substrate, insbesondere Wärmetauscher, vor Korrosion zu schützen, sind diese herkömmlicher weise mit Epoxidharzen beschichtet, welche jedoch nicht ausreichend hydrophil sind, um Tropfenbildung von kondensiertem Wasser zu unterdrücken.

Hydrophile Beschichtungen für Wärmetauscher auf der Basis von vernetzbarem Polyvinylalkohol sind auch bekannt und werden beispielsweise in den folgenden Dokumenten offernbart:
JP 2001 247822 A
US 5 813 452 A
EP 2 380 938 A1
EP 1 245 654 A1 und
WO 2012/165494 A1.

Die Aufgabe der vorliegenden Erfindung bestand somit darin, eine Beschichtung zur Verfügung zu stellen, die eine starke Adhäsion auf metallischen Substraten aufweist sowie hydrophil ist, um so die Bildung von Wassertropfen zu verhindern.

Überraschenderweise wurde nun gefunden, dass eine Zusammensetzung, die mindestens einen härtbaren Polyvinylalkohol und mindestens ein Polyethersiloxan als Benetzungsmittel umfasst, auf metallischen Substraten Beschichtungen ermöglicht, die eine starke Adhäsion auf metallischen Substraten haben sowie eine hohe Hydrophilie aufweisen, wobei die Beschichtung jedoch nicht wasserlöslich ist.

Die hydrophile Beschichtung haftet sehr gut auf metallischen Substraten und ist dazu in der Lage geschlossene Wasserfilme zu stabilisieren ohne sich dabei in Wasser zu lösen. Der mittels der Beschichtung stabilisierte Wasserfilm garantiert hohe Verdampfungsraten und somit eine effiziente und schnelle Kühlung von Wärmetauschern, was eine verbesserte Leistung sowie eine höhere Lebensdauer des Wärmetauschers bewirkt. Ferner schützt die Beschichtung gemäß der Erfindung das metallische Substrat vor Korrosion.

Daher richtet sich die vorliegende Erfindung in einem ersten Aspekt auf die Verwendung einer Zusammensetzung enthaltend mindestens einen härtbaren Polyvinylalkohol und mindestens ein Polyethersiloxan als Benetzungsmittel zum Beschichten eines Wärmetauschers gefertigt aus Aluminium-, Stahl- oder verzinktem oder legierungsverzinktem Stahlband.

In einem weiteren Aspekt betrifft die vorliegende Erfindung ein Verfahren zum Beschichten eines eines Wärmetauschers gefertigt aus Aluminium-, Stahl- oder verzinktem oder legierungsverzinktem Stahlband, umfassend die Schritte
(i) Auftragen einer wie hierin beschriebenen Zusammensetzung auf eine Oberfläche des Wärmetauschers; und
(ii) Aushärten der Zusammensetzung durch Erwärmen/Erhitzen auf eine Temperatur von 60 bis 230 °C.

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist. Alle Prozentangaben sind, sofern nicht anders angegeben, Gewichts-%. Numerische Bereiche, die in dem Format "von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

"Mindestens ein", wie hierin verwendet, bezieht sich auf 1 oder mehr, beispielsweise 1, 2, 3, 4, 5, 6, 7, 8, 9 oder mehr. Im Zusammenhang mit Bestandteilen der hierin beschriebenen Zusammensetzungen bezieht sich diese Angabe nicht auf die absolute Menge an Molekülen sondern auf die Art des Bestandteils. "Mindestens einen härtbaren Polyvinylalkohol" bedeutet daher beispielsweise einen oder mehrere härtbare Polyvinylalkohole, d.h. eine oder mehrere verschiedene Arten von härtbaren Polyvinylalkoholen. Zusammen mit Mengenangaben beziehen sich die Mengenangaben auf die Gesamtmenge der entsprechend bezeichneten Art von Bestandteil, wie bereits oben definiert.

Wie bereits oben beschrieben wurde, enthält die Beschichtungszusammensetzung mindestens einen härtbaren Polyvinylalkohol und mindestens ein Polyethersiloxan als Benetzungsmittel. Polyvinylalkohole sind im Stand der Technik etabliert. Sie werden herkömmlicher Weise durch die Verseifung von Polyvinylestern, vorzugsweise Polyvinylacetat, gewonnen. Gemäß der Erfindung können alle im Stand der Technik bekannten Polyvinylester und Gemische dieser verwendet werden, die für diesen Zweck geeignet sind. Polyvinylester können mittels radikalischer, anionischer oder kationischer Polymerisation aus ihren Monomeren erhalten werden. In einer bevorzugten Ausführungsform der vorliegenden Erfindung weist der härtbare Polyvinylalkohol einen Verseifungsgrad von zumindest 95 %, vorzugsweise von zumindest 96 % und bevorzugt von zumindest 97 % auf. Der Verseifungsgrad gibt an, wie viele der Estergruppen zu Alkoholgruppen verseift wurden. Ferner können die eingesetzten Polyvinylalkohole beispielsweise Silizium, Amin- und Thiolgruppen enthalten. Des Weiteren kann die Zusammensetzung weitere hydrophile Polymere, wie beispielsweise Hydroxylgruppen enthaltende Acrylharze, Polyacrylharze, Polyvinylsulfonsäuren, Polyvinylimidazol, Polyethylenoxid, Polyamid und wasserlösliches Nylon umfassen, wobei diese in der Summe in einem geringeren Gewichtsanteil als der Polyvinylalkohol in der Zusammensetzung enthalten sind. Die Molekulargewichte Mw der erfindungsgemäßen Polyvinylalkohole liegen üblicherweise in dem Bereich von 10.000 bis 120.000 g/mol, besonders bevorzugt im Bereich von 20.000 bis 60.000 g/mol.

In einer weiteren bevorzugten Ausführungsform ist der Polyvinylalkohol bei einer Temperatur von 60 bis 230 °C, vorzugsweise von 180 bis 210 °C, härtbar. Ohne an eine bestimmte Theorie gebunden zu sein, wird angenommen, dass bei diesen Temperaturen unter Wasserabscheidung Etherbindungen geknüpft werden und somit die Beschichtung gehärtet wird. Durch diese thermisch bedingte Polykondensation weist die erhaltene Beschichtung eine höhere mechanische Widerstandsfähigkeit auf.

In einer Ausführungsform der vorliegenden Erfindung, kann die erfindungsgemäße Zusammensetzung zusätzlich Härter enthalten. Diese können die mechanische Widerstandsfähigkeit der Beschichtung, indem sie die Härtung des Polyvinylalkohols verstärken weiter erhöhen. Dazu sind alle herkömmlichen Härter verwendbar, die für diesen Zweck geeignet sind, beispielsweise Schwefel-haltige oder Amin-funktionalisierte latente Härter. Ferner können auch modifizierte und unmodifizierte Polyamine oder Polyamide, wie Triethylentetramin, Tetraethylenpentamin, Diethylentriamin, Cyanoguanidin, Dicyandiamide und dergleichen verwendet werden. Des Weiteren können auch Härtungsbeschleuniger, wie modifizierter oder nicht modifizierter Harnstoff, beispielsweise Diphenylmethan-bis-Harnstoff, ein Imidazol oder Mischungen davon, hinzugefügt werden. In einer bevorzugten Ausführungsform wird jedoch auf organische Polymere und/oder Copolymere mit freien und/oder veresterten Carboxylat-Gruppen, die keine härtbaren Polyvinylalkohole darstellen, als Härter abgestellt, die vorzugsweise weniger als 3 Gew.%, besonders bevorzugt weniger als 1 Gew.%, in der Zusammensetzung enthalten sein können. Ein derartiger Vertreter eines Härters ist beispielsweise Polyacrylsäure, die ebenfalls mit dem Polyvinylalkohol reagieren, die Beschichtung zusätzlich härten und ferner die Adhäsion zwischen der Beschichtung und dem metallischen Substrat stärken kann. In einer bevorzugten Ausführungsform der vorliegenden Erfindung wird jedoch allein auf die selbstvernetzenden Eigenschaften des härtbaren Polyvinylalkohols abgestellt, so dass die Zusammensetzung insgesamt weniger als 1 Gew.-%, besonders bevorzugt weniger als 0,1 Gew.-% an solchen organischen Polymeren und/oder Copolymeren enthält, die sowohl keine härtbaren Polyvinylakohole als auch keine Polymere und/oder Copolymere mit freien und/oder veresterten Carboxylat-Gruppen darstellen. In diesem Zusammenhang wird vorzugsweise auch auf die Anwesenheit anorganischer Härter verzichtete, so dass die Zusammensetzung vorzugsweise weniger als 0,01 Gew.%, besonders bevorzugt weniger als 0,001 Gew.% an wasserlöslichen anorganischen Verbindungen der Elemente Zr und/oder Ti enthält.

Ferner enthält die Zusammensetzung gemäß der Erfindung mindestens Polyethersiloxan als Benetzungsmittel. Die Polyethersiloxane können sowohl linear als auch verzweigt sein. Wiederum ist es für die Bereitstellung einer hydrophilen Oberfläche bevorzugt, wenn die Zusammensetzung das Polyethersiloxan in einer Menge von 0,1 bis 5 Gew.%, besonders bevorzugt 0,2 bis 2 Gew.% bezogen auf die Gesamtzusammensetzung enthält, wobei das Mengenverhältnis von härtbaren Polyvinylalkohol zu Polyethersiloxan in der Zusammensetzung vorzugsweise im Bereich von 20 : 1 zu 80 : 1 liegt.

Das metallische Substrat, auf das die Beschichtung gemäß der Erfindung aufgebracht wird, kann Aluminium, Stahl, sowie verzinkten oder legierungsverzinkten Stahl sein. Optional kann das metallische Substrat mit einem Lack vorbehandelt sein. Es sei an dieser Stelle darauf hingewiesen, dass die Beschichtung erfindungsgemäß sowohl direkt auf das metallische Substrat als auch - falls das metallisch Substrat lackiert ist - auf die Lackschicht aufgebracht werden kann. Die Beschichtung gemäß der Erfindung verleiht dem metallischen Substrat unter anderem einen guten Korrosionsschutz. Das metallische Substrat ist ein Wärmetauscher. Wärmetauscher sind Vorrichtungen, die thermische Energie von einem Stoffstrom auf einen anderen übertragen. Bei Wärmetauschern sind die Stoffströme räumlich durch eine wärmedurchlässige Wand getrennt. Aufgetragen auf metallische Substrate, insbesondere auf Wärmetauscher, verhindert die erfindungsgemäße Beschichtung die Wassertropfenbildung auf der Oberfläche, so dass sich ein durchgehender Wasserfilm auf der Oberfläche ausbildet. Das Oberflächen-Volumen-Verhältnis ist bei Wasserfilmen vorteilhaft. Wasserfilme weisen eine große Oberfläche bei einem kleinen Volumen auf. Daher sind Wasserfilme auf der Oberfläche von Wärmetauschern von Vorteil, da das Wasser schnell verdampft, der Wärmetauscher effizient gekühlt und somit ein schneller und effizienter Austausch thermischer Energie ermöglicht wird. In einer bevorzugten Ausführungsform weist die Beschichtung eine Schichtdicke von 0,1 bis 10 µm, vorzugsweise von 1 bis 4 µm, auf.

Bevor die Beschichtung auf das metallische Substrat aufgebracht wird, kann dieses chemisch und/oder physikalisch vorbehandelt werden. Das Substrat kann beispielsweise mit einer Reinigungslösung gereinigt werden. Hierzu kann es mit einem entsprechenden Mittel besprüht oder in ein Bad eingetaucht werden, das das Reinigungsmittel enthält. Optional kann das metallische Substrat gebeizt werden. Diese Vorbehandlungen können bei Raumtemperatur oder bei erhöhter Temperatur erfolgen. Optional kann vor der erfindungsgemäßen Beschichtung eine Unterbeschichtung aus Harz oder Polyurethan aufgetragen werden, um die Korrosionsbeständigkeit zu erhöhen.

In einer bevorzugten Ausführungsform ist die Zusammensetzung eine wässrige Lösung oder Dispersion. Hierunter sind erfindungsgemäß Dispersionen, Emulsionen und Lösungen mit Wasser als Hauptlösungsmittel zu verstehen. Es können aber auch weitere Lösungsmittel zugesetzt sein, wie organische Lösungsmittel, beispielsweise Aceton, tert-Butylmethylether, Cyclohexan, Alkohole, wie Ethanol und n-Propanol, Triethylamin und Toluol. Im Allgemeinen können alle Lösungsmittel verwendet werden, die für diesen Zweck geeignet sind. Die wässrigen Dispersionen können organische Lösungsmittel enthalten, sind aber vorzugsweise im Wesentlichen frei von solchen organischen Lösungsmitteln. Die Konzentration des mindestens einen Polyvinylalkohols kann variabel gewählt werden und liegt vorzugsweise zwischen 5 und 95 Gew.%, besonders bevorzugt zwischen 10 und 60 Gew.%, insbesondere bevorzugt zwischen 20 und 40 Gew.% bezogen auf die Gesamtzusammensetzung. Ferner kann die Zusammensetzung anorganische Füllstoffe, Emulgatoren, Tenside, Pigmente, und/oder Farbstoffe und gegebenenfalls weitere Additive enthalten. Weitere Additive können beispielsweise antimikrobielle Wirkstoffe und Geruchsstoffe sein. Als antimikrobielle Wirkstoffe können beispielsweise Zinkpyrithion, 2-(4-Thiazoryl)benzimidazol, 1,2-Benzisothiazolin, 2-n-Octyl-4-isothiazolin-3-on, N-(Fluordichlormethylthio)phthalimid, N,N-Dimethyl-N'-phenol-N'-fluordichlormethylthio)sulfamid, Methyl-2-benzimidazolcarbamat, Bis(dimethylthiocarbamoyl)-disulfid, N-(Trichlormethylthio)-4-cyclohexan-1,2-dicaboxyimid und Bariummetaborat verwendet werden. Als Geruchsstoffe sind beispielsweise wasserlösliche Polyamide, Flavonoide, wässerige Phenole, Hydrazin-Derivate, wie Carbodihydrazide, Hydrazinadipat, Hydrazinsebatat, Hydrazindidodecat, Hydrazinisophthalat, 1,6-Hexamethylenbis(N,N'-dimethylsemicarbazid) oder 1,1,1',1'-Tetramethyl-4,4'-(methylen-di-p-phenylen)di-semicarbazid einsetzbar. Diese Zusatzstoffe sollen den Befall durch Pilze und Bakterien und die damit verbundene Entstehung von Schlechtgerüchen vorbeugen.

In einem weiteren Aspekt richtet sich die vorliegende Erfindung auf ein Verfahren zum Beschichten eines eines Wärmetauschers gefertigt aus Aluminium-, Stahl- oder verzinktem oder legierungsverzinktem Stahlband, das die Schritte
(i) Auftragen einer hierin beschriebenen Zusammensetzung auf eine Oberfläche des Wärmetauschers; und
(ii) Aushärten der Zusammensetzung durch Erwärmen/Erhitzen auf eine Temperatur von 60 bis 230 °C umfasst.

Die Zusammensetzung gemäß Schritt (i) des erfindungsgemäßen Verfahrens kann mittels aller herkömmlichen Techniken und Methoden aufgetragen werden, die für diesen Zweck geeignet sind. In einer bevorzugten Ausführungsform der vorliegenden Erfindung wird die Zusammensetzung mittels Besprühen, Tauchen, Rotationsbeschichten, Walzenauftragung, Rakeln und/oder Bedrucken auf das metallische Substrat, insbesondere auf den Wärmetauscher, in entsprechender Nassfilmdicke aufgebracht. Das Auftragen kann bei Raumtemperatur oder bei einer Temperatur von 25 bis 70 °C durchgeführt werden. Ferner kann das Auftragen bei erhöhter Temperatur erfolgen. In Schritt (i) des erfindungsgemäßen Verfahrens wird die Zusammensetzung in einer solchen Nassfilmdicke aufgetragen, dass die Zusammensetzung nach dem Erwärmen/Erhitzen in Schritt (ii), d. h. dem Aushärten, eine Trockenfilmdicke von 0,1 bis 10 µm, vorzugsweise von 1 bis 4 µm, aufweist. Im darauffolgenden Schritt (ii) des Verfahrens wird die Zusammensetzung durch Erwärmen/Erhitzen bei einer Temperatur von 60 bis 230 °C ausgehärtet. Vorzugsweise wird die Zusammensetzung bei einer Temperatur von 180 bis 210 °C ausgehärtet. Das Erwärmen/Erhitzen kann durch alle im Stand der Technik etablierten Verfahren beziehungsweise Techniken und Geräte geschehen, wie beispielsweise mit einem Ofen oder einem Heißluftgebläse. Je nach Bedarf kann der Schritt (ii) von wenigen Minuten bis zu mehreren Stunden durchgeführt werden, beispielsweise von 0,1 bis 72 Stunden, vorzugsweise von 1 bis 48 Stunden.

## Patentansprüche

1. Verwendung einer Zusammensetzung enthaltend mindestens einen härtbaren Polyvinylalkohol und mindestens ein Polyethersiloxan als Benetzungsmittel zum Beschichten eines Wärmetauschers gefertigt aus Aluminium-, Stahl- oder verzinktem oder legierungsverzinktem Stahlband.

2. Verwendung nach Anspruch 1, wobei der härtbare Polyvinylalkohol einen Verseifungsgrad von zumindest 95 %, vorzugsweise zumindest 96 %, bevorzugt zumindest 97 % aufweist.

3. Verwendung nach Anspruch 1 oder 2, wobei der härtbare Polyvinylakohol in einer Menge von zwischen 5 und 95 Gew.%, vorzugsweise zwischen 10 und 60 Gew.%, besonders bevorzugt zwischen 20 und 40 Gew.% bezogen auf die Gesamtzusammensetzung enthalten ist.

4. Verwendung nach einem der Ansprüche 1 bis 3, wobei der härtbare Polyvinylalkohol bei einer Temperatur von 60 bis 230 °C, vorzugsweise von 180 bis 210 °C, härtbar ist.

5. Verwendung nach einem der Ansprüche 1 bis 4, wobei die Zusammensetzung weniger als 3 Gew.-%, vorzugsweise weniger als 1 Gew.-% an organischen Polymeren und/oder Copolymeren mit freien und/oder veresterten Carboxylat-Gruppen, die keine härtbaren Polyvinylalkohole darstellen, enthält.

6. Verwendung nach einem der Ansprüche 1 bis 5, wobei die Zusammensetzung insgesamt weniger als 0,01 Gew.%, vorzugsweise weniger als 0,001 Gew.% an wasserlöslichen anorganischen Verbindungen der Elemente Zr und/oder Ti enthält.

7. Verwendung nach einem der Ansprüche 1 bis 6, wobei das Polyethersiloxan vorzugsweise in einer Menge von 0,1 bis 5 Gew.%, vorzugsweise 0,2 bis 2 Gew.% bezogen auf die Gesamtzusammensetzung enthalten ist, wobei das Mengenverhältnis von härtbaren Polyvinylalkohol zu Polyethersiloxan in der Zusammensetzung vorzugsweise im Bereich von 20 : 1 zu 80 : 1 liegt.

8. Verwendung nach einem der Ansprüche 1 bis 7, wobei die Beschichtung eine Schichtdicke von 0,1 bis 10 µm, vorzugsweise von 1 bis 4 µm, aufweist.

9. Verwendung nach einem der Ansprüche 1 bis 8, wobei die Zusammensetzung eine wässrige Lösung oder Dispersion ist.

10. Verfahren zum Beschichten eines Wärmetauschers gefertigt aus Aluminium-, Stahl- oder verzinktem oder legierungsverzinktem Stahlband, umfassend
(i) Auftragen einer Zusammensetzung, die gemäß einem oder mehreren der Verwendungsansprüche 1 bis 9 offenbart ist, auf eine Oberfläche des Wärmetauschers; und
(ii) Aushärten der Zusammensetzung durch Erwärmen/Erhitzen auf eine Temperatur von 60 bis 230 °C.

11. Verfahren nach Anspruch 10, wobei das Auftragen in Schritt (i) durch Besprühen, Tauchbeschichten, Rotationsbeschichten und/oder Bedrucken erfolgt.

12. Verfahren nach Anspruch 10 oder 11, wobei die Zusammensetzung in einer solchen Nassfilmdicke aufgetragen wird, dass die Zusammensetzung nach dem Erwärmen/Erhitzen in Schritt (ii) eine Trockenfilmdicke von 0,1 bis 10 µm, vorzugsweise von 1 bis 4 µm, aufweist.

## Claims

1. The use of a composition containing at least one curable polyvinyl alcohol and at least one polyether siloxane as a wetting agent for coating a heat exchanger made of aluminum, steel or galvanized or alloy-galvanized steel strip.

2. The use according to claim 1, wherein the curable polyvinyl alcohol has a degree of saponification of at least 95%, preferably at least 96%, more preferably at least 97%.

3. The use according to claim 1 or 2, wherein the curable polyvinyl alcohol is contained in an amount of between 5 and 95 wt.%, preferably between 10 and 60 wt.%, particularly preferably between 20 and 40 wt.%, based on the total composition.

4. The use according to one of claims 1 to 3, wherein the curable polyvinyl alcohol is curable at a temperature of 60 to 230 °C, preferably 180 to 210 °C.

5. The use according to one of claims 1 to 4, wherein the composition contains less than 3 wt.%, preferably less than 1 wt.%, of organic polymers and/or copolymers having free and/or esterified carboxylate groups which are not curable polyvinyl alcohols.

6. The use according to one of claims 1 to 5, wherein the composition contains in total less than 0.01 wt.%, preferably less than 0.001 wt.%, of water-soluble inorganic compounds of the elements Zr and/or Ti.

7. The use according to one of claims 1 to 6, wherein the polyether siloxane is preferably contained in an amount of 0.1 to 5 wt.%, preferably 0.2 to 2 wt.%, based on the total composition, wherein the amount ratio of curable polyvinyl alcohol to polyether siloxane in the composition is preferably in the range of 20:1 to 80:1.

8. The use according to one of claims 1 to 7, wherein the coating has a layer thickness of 0.1 to 10 µm, preferably 1 to 4 µm.

9. The use according to one of claims 1 to 8, wherein the composition is an aqueous solution or dispersion.

10. A method for coating a heat exchanger made of aluminum, steel or galvanized or alloy-galvanized steel strip, comprising the steps of:
(i) applying a composition, disclosed according to one or more of use claims 1 to 9, to a surface of the heat exchanger; and
(ii) curing the composition by warming/heating to a temperature of 60 to 230 °C.

11. The method according to claim 10, wherein the application in step (i) is carried out by spraying, dip coating, spin coating and/or printing.

12. The method according to claim 10 or 11, wherein the composition is applied in a wet film thickness such that, after warming/heating in step (ii), the composition has a dry film thickness of 0.1 to 10 µm, preferably 1 to 4 µm.

## Revendications

1. Utilisation d'une composition contenant au moins un alcool polyvinylique durcissable et au moins un polyéthersiloxane comme agents mouillants pour le revêtement d'un échangeur de chaleur fabriqué à partir de bandes d'aluminium, de feuillards d'acier ou de feuillards d'acier galvanisés ou galvanisés par alliage.

2. Utilisation selon la revendication 1, dans laquelle l'alcool polyvinylique durcissable a un degré de saponification d'au moins 95 %, en particulier d'au moins 96 %, de préférence d'au moins 97 %.

3. Utilisation selon la revendication 1 ou 2, dans laquelle l'alcool polyvinylique durcissable est présent en une quantité comprise entre 5 et 95 % en poids, en particulier entre 10 et 60 % en poids, de manière particulièrement préférée entre 20 et 40 % en poids par rapport à la composition totale.

4. Utilisation selon l'une des revendications 1 à 3, dans laquelle l'alcool polyvinylique durcissable est durcissable à une température comprise entre 60 et 230 °C, en particulier entre 180 et 210 °C.

5. Utilisation selon l'une des revendications 1 à 4, dans laquelle la composition contient moins de 3 % en poids, en particulier moins de 1 % en poids de polymères et/ou de copolymères organiques comprenant des groupes carboxylates libres et/ou estérifiés ne présentant aucun alcool polyvinylique durcissable.

6. Utilisation selon l'une des revendications 1 à 5, dans laquelle la composition contient au total moins de 0,01 % en poids, en particulier moins de 0,001 % en poids de composés minéraux hydrosolubles des éléments Zr et/ou Ti.

7. Utilisation selon l'une des revendications 1 à 6, dans laquelle le polyéthersiloxane est de préférence présent en une quantité de 0,1 à 5 % en poids, en particulier de 0,2 à 2 % en poids par rapport à la composition totale, le rapport quantitatif d'alcool polyvinylique durcissable au polyéthersiloxane dans la composition étant de préférence compris dans l'intervalle de 20: 1 à 80: 1.

8. Utilisation selon l'une des revendications 1 à 7, dans laquelle le revêtement a une épaisseur de couche comprise entre 0,1 et 10 µm, de préférence entre 1 et 4 µm.

9. Utilisation selon l'une des revendications 1 à 8, dans laquelle la composition est une solution ou dispersion aqueuse.

10. Procédé de revêtement d'un échangeur de chaleur fabriqué à partir de bandes d'aluminium, de feuillards d'acier ou de feuillards d'acier galvanisés ou galvanisés par alliage, comprenant :
(i) l'application d'une composition divulguée, selon au moins l'une des revendications d'utilisation 1 à 9, sur une surface de l'échangeur de chaleur ; et
(ii) le durcissement de la composition par chauffage à une température comprise entre 60 et 230 °C.

11. Procédé selon la revendication 10, dans lequel l'application à l'étape (i) est effectuée par pulvérisation, par immersion, par centrifugation et/ou par impression.

12. Procédé selon la revendication 10 ou 11, dans lequel la composition est appliquée sur une épaisseur de film humide telle que la composition, après le chauffage à l'étape (ii), ait une épaisseur de film sec comprise entre 0,1 et 10 µm, de préférence entre 1 et 4 µm.
